# EUROPEAN PATENT APPLICATION

(11) **EP 4 817 722 A1**
(43) Date of publication of application: **07.10.2026**
(21) Application number: 26169877.3
(22) Date of filing: 31.03.2026
(51) Int. Cl.: B01D 53/04

(54) **MOBILE GAS FILTER**

(30) Priority: 31.03.2025 BE 202505190
(71) Applicant: Cargen Group BV, 2070 Zwijndrecht (BE)
(72) Inventor: VAN DIJCK, Geert, 2070 Zwijndrecht (BE)
(74) Representative: Brantsandpatents bv

(57) **Abstract**

The present invention relates to a mobile filter device for filtering a gas, comprising a tank vessel for receiving, storing, and discharging a gas, and a mounting structure suitable for repeated demountable connection of the mobile filter device to a transport device, the tank vessel comprising an interior and an exterior, wherein the tank vessel comprises on the interior an adsorbent for adsorbing contaminants from the gas, wherein the tank vessel is provided around the exterior with one or more fluid conduits suitable for heat exchange, and wherein the tank vessel is further a thermally insulated tank vessel.

## Description

### TECHNICAL FIELD

The invention relates to a mobile gas filter and use thereof.

### BACKGROUND ART

In the prior art, various methods and apparatus for filtering media are available. A common method is the use of an adsorbent such as activated carbon filters. These filters are typically fixed installations, permanently mounted at one location and often manufactured from steel with a protective internal coating to resist corrosion. These systems are not easily adaptable to changing circumstances or location requirements due to their static nature and size. Furthermore, an adsorbent such as an activated carbon filter requires regular replacement and maintenance, which in the current filters can lead to higher operational costs and potential interruptions in the filtration process. Also, the management of spent carbon is an environmental burden and logistical challenge, given the necessity for safe disposal or regeneration. These shortcomings in the existing technology underscore the need for filter solutions that are mobile.

EP3870339 discloses an activated carbon adsorber unit suitable for gases and liquids, wherein an activated carbon adsorber is provided with a frame-like transport rack for transport by means of a vehicle for goods transport. The transport rack and the housing of the activated carbon adsorber are thereby made from an ISO tank container.

A problem with the use of these mobile activated carbon filters for gases is the temperature rise during operation. If the temperature rises too high, desorption can occur instead of adsorption. This means that previously retained contaminants are released again into the gas, whereby the quality of the produced green gas no longer meets the applicable standards.

Furthermore, the filter performance is highly dependent on the ambient temperature. At high ambient temperatures, the tank vessel can heat up, whereby desorption occurs instead of adsorption and previously retained contaminants are released again into the gas. At low ambient temperatures, the tank vessel can cool down to below the dew point of the gas flow, whereby condensation occurs in the adsorbent with efficiency loss, increased pressure drop, and risk of blockage as a result. In both cases, this leads to an unstable and uncontrollable filtration process.

CN220125845 describes an exclusively stationary adsorber provided with an internal cooling system, wherein cooling coils are in direct contact with the filter medium. Under extreme external conditions, heating up or cooling down of the tank vessel cannot be avoided. Furthermore, because the internal coil is in direct contact with the process flow, local temperature gradients arise in the adsorption bed whereby no homogeneous temperature profile is realized. In the event of leakage of the cooling circuit, cooling medium enters directly into the filter medium.

Existing methods for controlling temperature fluctuations are often not applied to mobile units, whereby a continuous challenge remains in effectively managing the filtration conditions in variable use situations.

### SUMMARY OF THE INVENTION

The invention relates to a mobile filter device for filtering a gas according to claim 1.

By providing heat-exchange conduits around the tank, an efficient and constant heat dissipation is realized, whereby the temperature of the adsorbent remains better under control. This reduces the risk of overheating and prevents desorption from occurring instead of adsorption. As a result, the filter performance remains stable and the continuous removal of contaminants is ensured.

An additional advantage of the heat-exchange conduits placed around the circumference is the increased flexibility in use. Because the heat exchange is arranged uniformly around the filter device, it can be deployed not only in a horizontal position but also vertically without losing efficiency or heat-exchange effect. This increases the range of applications and makes the filter device suitable for diverse installations and spatial constraints, where traditional systems are limited in their positioning.

Furthermore, the improved temperature control contributes to a longer service life of the adsorbent because thermal degradation and unwanted re-emission of adsorbed substances are limited. This extends maintenance intervals and reduces operational costs, contributing to a more reliable and economically attractive filtration solution for green gas producers.

### DETAILED DESCRIPTION

The invention relates to a mobile filter device for filtering a gas.

Unless otherwise defined, all terms used in the description of the invention, including technical and scientific terms, have the meaning commonly understood by a person skilled in the art to which the invention pertains. For a better understanding of the description of the invention, the following terms are explicitly defined.

The term "gas" refers in the present invention to all types of gases or gaseous compositions.

The term "mobile" refers to the ability of the filter device to be moved.

The term "DIN standard" refers to the standardization systems developed by the German Institut für Normung, which translates to the German Institute for Standardization. DIN standards form a set of technical specifications and guidelines that have been established to ensure consistency, efficiency, and safety in various industries and fields. To bring the filter device from horizontal transport position to vertical operational position, use is made of special trailers or roll-off tipper vehicles. DIN standard 30734 specifies the connection dimensions and requirements, including the magnitude of the alternating forces and the maximum permissible filling weight under static load.

The term "filter device" refers in this context to a tank vessel in a frame that provides a wholly or partially enclosed space that can be used to receive, store, and transport a medium. The filter device may also be provided with elements that are generally known for filling, receiving, storing, inspecting, and transporting a medium. These elements may further consist of structures such as a manhole, certain inlet and/or outlet conduits, connecting pipes, a ladder, means of transport such as hooks or wheels, etc. The filter device may possess in the tank vessel a "manhole" - (i.e., inspection or maintenance opening) which is the top opening, an opening in the side wall, or the bottom of a tank vessel and normally serves as an access point for making connections, inspection, valve adjustments, or carrying out maintenance.

As used herein, the term "ISO standard" generally refers to the dimensions (e.g., sizes and volumes) established by the International Organization for Standardization (ISO). ISO is an international organization that develops standards that ensure that products, services, and systems are safe, reliable, and of good quality. The term "ISO" in general implies conformity with or use of specific standards developed by ISO that are relevant to the design, production, and testing procedures of the mobile filter device and its components. This includes, but is not limited to, standards related to quality, safety, efficiency, and compatibility with other systems or equipment. In the present context, this indicates that the mobile filter device may conform to specific ISO standards that apply to the design, manufacture, safety, and quality of containers used for the transport and storage of gases and other media. This may refer, for example, to ISO 668.

The term "ISO corner casting" refers to a structural element located at the corners of a filter device, as defined by ISO. It is a reinforced metal fitting that is designed to reinforce the corners of the container and to enable the stacking and moving of containers. These corner fittings have a standardized design, enabling containers to be easily loaded and unloaded onto trucks, trains, and ships using cranes and other lifting equipment.

The term "media" or "medium" refers to substances such as liquids (e.g., water, oil) or gases (e.g., air) that are filtered or processed in the described mobile filter device. The term "means of transport" refers in this context to a device that is designed for transporting the filter device. Preferably, it is a motorized vehicle that is commonly used for the transport of the filter device. Examples of means of transport are trucks, boats, trains, etc. "Intermodal transport" refers in the present invention to all forms of transport in which two or more different forms of transport are combined, such as road, sea, and rail transport.

The term "adsorbent" refers to a material that is capable of binding one or more substances to its surface via physical or chemical interactions, without a significant change in volume or internal uptake of the substance occurring thereby. The adsorbent is preferably a porous solid material, such as activated carbon, silica gel, a zeolite, or a metal-organic framework (MOF), that has a high specific surface area and is suitable for reversibly adsorbing volatile components or contaminants from a gas or liquid flow.

The term "activated carbon" or "activated charcoal" refers to the material that is used as adsorbent. Activated carbon is a form of carbon that has been processed to have a very large surface area per volume, making it extremely effective for adsorption of contaminants from gases or liquids. The term "activated carbon filter bed" refers to the actual configuration in which activated carbon is placed. The filter bed may be regarded as the structure or arrangement in which the activated carbon is located. This may be a bed of loose granules, a mat of bonded carbon, or another physical form in which the activated carbon can effectively function to purify the medium. Thus, while "activated carbon" denotes the material itself, the "activated carbon filter bed" describes the physical form and context in which this activated carbon is used within the filtration system.

The term "means of transport" refers in this context to a device that is designed for transporting the filter device. Preferably, it is a motorized vehicle that is commonly used for the transport of the filter device. Examples of means of transport are trucks, boats, trains, etc. "Intermodal transport" refers in the present invention to all forms of transport in which two or more different forms of transport are combined, such as road, sea, and rail transport.

The term "skid" refers in this context to a supporting structure or chassis on which the filter device rests and by means of which it is transported.

The terms "filtering" or "purifying" are to be understood as the process whereby unwanted constituents are removed from a medium, in particular a gas, by passing this medium through the activated carbon filter bed that is capable of adsorbing or absorbing contaminants from the medium. This process results in the reduction or elimination of chemical, physical, or biological contaminants and renders the medium more suitable for safe use, further processing, or discharge into the environment.

The term "fluid conduit suitable for heat exchange" is synonymous with "heat-exchange conduit" and denotes a conduit that is arranged for transporting a heat-exchanging medium, such as a liquid or gas, for the purpose of heat transfer between the conduit and an adjacent structure, such as a tank vessel. The heat-exchange conduit can be used for both cooling and heating the contents of the tank vessel.

As used in this application, the term "mounting structure" refers to a structure to which another structure is secured, or on which a structure is placed for improved accessibility or use; in particular, a mounting structure can be in direct or indirect contact with the filter device, and can provide reinforcement, framing, or support to the filter device. Preferably, the mounting structure can furthermore be used for improved handling or transport of the mobile filter device. The mounting structure can be produced using diverse materials, such as a composite material comparable to the container wall, but also another material, such as a metal, a metal alloy, etc.; as long as the material can provide sufficient structural stability to ensure the described objectives.

As used in this document, "a", "an" and "the" refer to both the singular and the plural, unless the context clearly dictates otherwise. For example, "a segment" means one or more than one segment.

The terms "comprise", "comprising", "consist of", "consisting of", "provided with", "contain", "containing", "encompass", "encompassing", "include" and "including" are synonyms and are inclusive or open terms indicating the presence of what follows, and do not exclude or preclude the presence of other components, features, elements, members or steps known from or described in the prior art.

The citation of numerical ranges by their endpoints includes all integers, fractions and/or real numbers between the endpoints, inclusive.

In a first aspect, the invention relates to a mobile filter device for filtering a medium, preferably a gas. In a preferred embodiment, the mobile filter device comprises a tank vessel for receiving, storing, and discharging a medium, preferably a gas, and a mounting structure suitable for repeated demountable connection of the mobile filter device to a transport device.

A mobile filter device provides a flexible and efficient solution for filtering a medium, preferably a gas, essential in various sectors such as industry, the chemical sector, energy production, and medical applications. Often, a fixed filtration system is impractical, especially in situations where temporary or variable filtration requirements apply, or where a permanent installation is not feasible or cost-effective. This mobile filter device can be easily moved to different locations, thereby enabling on-site filtration, precisely where and when this is needed. Some projects or processes require only temporary filtration of a medium. In such cases, a mobile solution will reduce the costs and efforts associated with installing a permanent filtration system.

The mobile filter device comprises a tank vessel suitable for receiving, storing, and discharging the medium. A filter is provided on the interior of the tank vessel.

As used in this application, the term "filter" refers to any porous device for removing impurities or solid particles from a liquid or gas passing therethrough; in particular for filtering corrosive or highly reactive substances obtained by means of an industrial process. Examples of filtration methods as known in the art and as commonly used by the industry can include, but are not limited to, biological filtration, carbon filtration, adsorption beds, sand filtration, dual-media filtration, resin ion exchange, and the like. Preferably, the filter can be an activated carbon filter that makes use of a bed of activated carbon to remove contaminants and impurities using physicochemical adsorption, wherein pollutant molecules in the fluid to be treated are trapped in the pore structure of the carbon substrate. Alternatively, other processing methods can be used for processing corrosive or highly reactive substances, such as wet cleaning, cleaning with gas or air, combustion, and the like. These alternative processing methods are in particular useful for processing corrosive or highly reactive substances that are very difficult or impossible to purify using filtration methods.

The adsorbent is preferably an activated carbon filter bed. The medium will flow through the activated carbon filter bed, wherein contaminants from the medium are adsorbed. The filter bed provided with activated carbon will remove contaminants from the medium, preferably a gas, by adsorbing them, which means that the contaminants are retained on the surface of the activated carbon. Activated carbon is particularly effective in adsorbing a wide range of contaminants, including organic compounds, odors, tastes, chemicals, and other undesirable substances. This filter bed can take various forms, ranging from granules to other structures such as mats or membranes. The activated carbon can be packaged in bags, cartridges, or loosely filled into a compartment within the tank vessel.

The mobile filter device therefore preferably uses activated carbon as the primary filtration medium. Activated carbon or activated charcoal is known for its excellent ability to adsorb contaminants thanks to the high microporosity and a large surface area. Activated carbon is particularly effective in removing organic compounds, solvents, pesticides, heavy metals, odors, and other gases, thereby providing a versatile and powerful solution for a wide range of purification challenges. Activated carbon can be regenerated or cleaned of the adsorbed contaminants by heating it or by means of a chemical treatment, thereby making it reusable for multiple filtration cycles. The mobility of the filter device increases the operational flexibility herein. This makes the mobile filter device an optimal choice for locations that require temporary or specific purification actions.

The tank vessel is provided around the exterior with one or more fluid conduits suitable for heat exchange ("heat-exchange conduits"). These conduits can be used for both heating and cooling the contents of the tank vessel. Preferably, the conduits are used for cooling, wherein a suitable cooling medium is passed through the conduits to efficiently dissipate heat. In an alternative embodiment, the conduits are used for heating, wherein a suitable heating medium is passed through the conduits to efficiently supply heat.

The heat-exchange conduit can therefore be used for both cooling and heating, depending on the ambient conditions. In warm environments, a cooling medium is circulated through the conduits to prevent desorption of volatile components from the adsorbent. In cold environments, a heating medium is circulated through the conduits to keep the wall temperature above the dew point of the gas flow and thus to avoid condensation in the adsorbent.

In one embodiment, the heat-exchange conduits comprise a single conduit that is wound around the tank vessel, for example in a helical configuration. This ensures uniform heat exchange over the entire surface of the vessel, whereby the temperature of the contents is effectively controlled. The helical design can vary in pitch and diameter, depending on the desired heat-exchange capacity and the available space.

In an alternative embodiment, the heat-exchange conduits can consist of a plurality of separate conduits arranged around the tank vessel in a back-and-forth pattern. This can be achieved, for example, by positioning the conduits alternately horizontally or vertically, so that a maximum surface coverage is achieved. Such configurations can offer advantages in situations wherein a more targeted heat-exchange control is required.

In a preferred embodiment, the heat-exchange conduit runs over the full length of the tank vessel, wherein the one or more fluid conduits are provided over at least half of the circumference of the tank vessel. In a preferred embodiment, the one or more fluid conduits extend over a large portion of the circumference but leave one side uncovered, so that, for example, connection points or mounting elements can be more easily integrated with the tank vessel. This design can also be advantageous for situations wherein a controlled heat flow is required or when specific zones of the tank vessel require less heat-exchange capacity.

In one embodiment, one side of the tank vessel is not provided with fluid conduits over its full length, so that, for example, connection points or mounting elements can be more easily integrated with the tank vessel. In one embodiment, furthermore a surface on the tank vessel is not provided with fluid conduits, so that a manhole can be provided in the tank vessel.

The choice of the heat-exchange medium, such as the heating medium or the cooling medium, can depend on the specific application. In a preferred embodiment, a liquid coolant is used such as water, glycol mixtures, or another thermally efficient liquid. Alternatively, a gaseous heat-exchange medium, such as CO₂ or ammonia, can be applied, for example in systems wherein a stronger cooling effect is desired.

Preferably, the heat-exchange conduits are made of a material with a high thermal conductivity, such as copper or aluminum. This improves the efficiency of the heat exchange and contributes to faster temperature control of the contents of the tank vessel. Depending on the installation requirements, the conduits can be mounted directly on the vessel surface or kept at some distance using brackets or spacers.

In a preferred embodiment, the tank vessel is further a thermally insulated tank vessel. In a further preferred embodiment, the tank vessel is provided with an insulation layer located on top of the heat-exchange conduits. This reduces heat loss and increases the energy efficiency of the system.

In a further preferred embodiment, the insulation layer comprises multiple layers with different properties. For example, an inner layer may contain a thermally reflective material to optimize the heat exchange between the tank wall and the conduits, while an outer layer consists of a robust and moisture-resistant insulation material to increase the durability of the system.

In an additional embodiment, the insulation may cover only certain zones of the tank vessel. This may, for example, be advantageous in a system in which specific parts of the vessel need to cool down or heat up faster than other parts. The insulation may thereby be shaped such that heat-exchange processes are concentrated in strategically chosen zones. In a preferred embodiment, the complete exterior of the tank vessel is provided with a thermal insulation layer.

Preferably, the insulation is manufactured from materials with a high thermal resistance, such as expanded polyurethane (PU), extruded polystyrene (XPS), or mineral wool. Depending on the requirements, the insulation layer may be flexible or rigid, wherein flexible variants are suitable for tank vessels with complex shapes and rigid variants offer advantages in terms of structural protection.

In a further embodiment, the insulation layer is shielded by a protective outer jacket, for example a metal or plastic housing, which provides additional mechanical protection and prevents moisture or dirt from affecting the insulation. This may be of particular importance in industrial applications or in environments with variable weather conditions. In this embodiment, the tank vessel is thus provided with a protective jacket on top of the insulation layer.

In a preferred embodiment, the mobile filter device comprises:
- a tank vessel for receiving, storing, and discharging a gas, the tank vessel comprising an interior and an exterior, wherein the tank vessel comprises on the interior an adsorbent for adsorbing contaminants from the gas, and
- a mounting structure suitable for repeated demountable connection of the mobile filter device to a transport device,
wherein the tank vessel is provided around the exterior with one or more fluid conduits suitable for heat exchange, and wherein the tank vessel is further a thermally insulated tank vessel, preferably the tank vessel is provided with an insulation layer located on top of the one or more fluid conduits.

The external heat-exchange conduit in combination with the thermal insulation layer makes it possible to realize a homogeneous and stable temperature profile over the complete adsorption bed, regardless of variable or extreme external conditions. This ensures a constant and optimal filtration performance. The insulation layer on top of the conduits moreover ensures that the heat exchange proceeds efficiently and in a directed manner between the conduits and the tank vessel, without energy loss to the external environment.

Compared to an internal cooling system, such as an internal coil, the external arrangement offers additional advantages: there is no direct contact between the heat-exchange circuit and the process flow, whereby leakage risks and corrosion caused by reactive gas components are avoided, and the tank vessel remains free of obstacles when emptying and cleaning.

The mobile filter device is further provided with a mounting structure suitable for repeated demountable connection of the mobile filter device to a transport device.

In particular, the mobile filter device according to the present invention provides that the mounting structure is non-demountably attached to the filter device.

In particular, the mobile filter device according to the present invention provides that the mounting structure is arranged to be repeatedly attached to, locked with, secured to, connected to, coupled to, and/or connected to a complementary transport mounting structure on a transport device.

In one embodiment, the mounting structure is a frame, the frame being suitable for repeated demountable connection of the filter device to a means of transport. In a preferred embodiment, the mounting structure is a frame that fully encloses the tank vessel.

This enclosing structure provides robust protection for the tank vessel against external influences, such as mechanical damage during transport or exposure to environmental factors that could degrade the filter device. The complete enclosure of the tank vessel by the frame also provides improved stability and safety during loading and unloading, as well as during transport. In addition, this complete enclosure facilitates the implementation of additional safety measures, such as locks and seals, that prevent unauthorized access to the contents of the tank vessel.

In a preferred embodiment, the mobile filter device comprises:
- a tank vessel for receiving, storing, and discharging a gas, the tank vessel comprising an interior and an exterior, wherein the tank vessel comprises on the interior an adsorbent for adsorbing contaminants from the gas, and
- a frame suitable for repeated demountable connection of the mobile filter device to a transport device, wherein the frame fully encloses the tank vessel,
wherein the tank vessel is provided around the exterior with one or more fluid conduits suitable for heat exchange, and wherein the tank vessel is further a thermally insulated tank vessel, preferably the tank vessel is provided with an insulation layer located on top of the one or more fluid conduits.

This frame is preferably beam-shaped and fully encloses the tank vessel. According to one embodiment, the frame thus comprises twelve ribs and eight corners, which form the corners of the filter device, and thereby provides a robust and stable structure. Furthermore, a plurality of cross beams are present that connect the corner posts to one another both at the top and at the bottom of the frame. This configuration contributes to the overall strength and durability of the filter device and facilitates a safe and efficient coupling to various means of transport.

This frame is preferably beam-shaped and fully encloses the tank vessel. According to one embodiment, the frame thus comprises twelve ribs and eight corners, which form the corners of the filter device, and thereby provides a robust and stable structure.

Furthermore, a plurality of cross beams are present that connect the corner posts to one another both at the top and at the bottom of the frame. This configuration contributes to the overall strength and durability of the filter device and facilitates a safe and efficient coupling to various means of transport.

The frame has a beam shape, which is formed by four cross beams that are parallel to the length of the tank vessel, wherein the length of the tank vessel extends from the top to the bottom of the tank vessel, wherein bottom and top in this context describe the bottom and top of the filter device in vertical position. Furthermore, the cross beams are connected to one another by means of corner posts via the corners, so that a beam-shaped frame is formed.

At each corner, ISO corner castings are preferably present that ensure compatibility with standard transport systems.

According to one embodiment, the frame comprises a maximum height of 2,600 mm, a maximum length of 6,100 mm, and a maximum width of 2,500 mm. According to another embodiment, the height can vary between 2,000 mm and 2,700 mm, preferably between 2,400 mm and 2,600 mm, and more preferably approximately 2,600 mm. The length can vary between 5,800 mm and 6,400 mm, preferably between 6,000 mm and 6,200 mm, and more preferably approximately 6,100 mm. The width can vary between 2,400 mm and 2,600 mm, preferably approximately 2,500 mm.

According to a preferred embodiment, the frame is a standardized ISO frame, preferably a standardized 20ft ISO frame. Preferably, the mobile filter device complies with the standards of the International Organization for Standardization (ISO), preferably with a standardized 20ft ISO tank container. Both the frame and the tank vessel can fully comply with these international standards. This ensures that both the structural basis (the frame) and the specific storage element (the tank vessel) are consistent and compatible with the global industry standards as established by the ISO.

This choice for an ISO tank container offers numerous advantages. Conformity with international standards ensures that the filter device is compatible with various global means of transport, such as ships, trucks, and trains. This standardization not only facilitates the worldwide transport of the filter device, but also makes use of the intermodality that ISO tank containers make possible. As a result, the mobile filter device can be effortlessly transferred between different means of transport without the need to transfer the cargo. This increases the efficiency and flexibility in transport over long distances. In addition, ISO 20ft frames offer stability and robustness, as they are designed to withstand heavy loads and are suitable for stacking. Alternatively, the ISO tank container can also have a different standardized size, such as a 10ft, 30ft, 40ft, or 45ft ISO tank container.

According to a further embodiment, the frame is provided with ISO corner castings. ISO corner castings are designed to be compatible with the international standards for container transport and storage. The standard format and positioning of the ISO corner castings ensure compatibility and uniformity in the handling of containers throughout the world. They serve, for example, as connection points by means of which containers can be coupled to one another, stacked, and held securely in place during transport. These standardized corner fittings have contributed to the efficiency and global interoperability of container transport. ISO corner castings thus make it possible to securely and firmly attach the filter device to various means of transport. Moreover, the ISO corner castings ensure a high degree of stability and safety during the transport and storage of the filter device. They ensure that the filter device remains firmly in place, even under heavy load and in challenging conditions. This reduces the risk of damage to the filter device and to the surrounding equipment and infrastructure.

The external dimensions of the frame are preferably defined in ISO standard 668.

In one embodiment, the mobile filter device comprises a skid, provided on a side face of the filter device. This skid is designed to enable the loading and unloading of the filter device onto and from the means of transport, as well as to enable easy manipulation of the filter device from a horizontal to a vertical position and vice versa. The placement of the skid on the underside increases the efficiency of the transport operations and contributes to the ease of use of the filter device.

In one embodiment, the skid is equipped with at least two ribs that are positioned parallel to each other in the longitudinal direction of the tank vessel, wherein the length of the tank vessel extends from the top to the bottom of the tank vessel, wherein bottom and top in this context describe the bottom and top of the filter device in the vertical state. These ribs can thus be provided on the frame whereby it is attached at the top and bottom of the frame to two parallel corner posts, or directly attached to the outside of the tank vessel. In a preferred embodiment, the skid is attached at the top and bottom of the frame to two parallel corner posts and also to the outside of the tank vessel.

In a preferred embodiment, the skid of the mobile filter device is configured to comply with the DIN 30734 standard, such that the dimensions of the skid are defined in the DIN 30734 standard.

In one embodiment, the tank vessel is further provided on the interior with a distribution system for distributing incoming medium in the tank vessel. This distribution system ensures that the medium is distributed uniformly within the vessel, allowing efficient processing or reaction to take place.

In a preferred embodiment, the distribution system comprises a conduit provided with a plurality of perforations for creating a gas flow. The perforations may be distributed uniformly over the conduit or arranged in a specific pattern, depending on the desired flow characteristics. Preferably, the perforations have a variable diameter or shape, so that the gas flow can be optimally adapted to the internal dynamics of the tank vessel.

In an alternative embodiment, the conduit may extend along the full length of the tank vessel or be located only in a specific portion of the vessel. For example, a central distributor may be applied to distribute the medium symmetrically, while a peripherally oriented distributor may be directed at specific zones within the vessel.

In a further embodiment, the distribution system is equipped with a plurality of conduits that are individually controllable. This allows the distribution of the incoming medium to be dynamically adjusted based on the process conditions. This may, for example, be useful in systems in which the gas flow must be variably set depending on the filling level or the type of medium in the tank vessel.

In an additional embodiment, the conduit is provided with a Venturi structure or a diffuser, whereby the incoming gas flow is accelerated or alternatively decelerated. This can improve the mixing of the medium and contribute to a more efficient distribution in the vessel.

Preferably, the distribution system is manufactured from a material that is resistant to chemical and thermal influences, such as stainless steel, titanium, or a chemically resistant polymer. Depending on the application, the distribution system may also be provided with an anti-clogging mechanism, such as a backwash system or self-cleaning perforations.

In a further embodiment, the distribution system can be constructed modularly, so that components can be replaced or adjusted individually. This allows the system to be flexibly deployed for different applications, for example by modifying the perforation configuration or the conduit diameter without having to dismantle the entire tank vessel.

According to a further or alternative embodiment, the tank vessel has a total volume of at least 14,000 liter and at most 27,000 liter, more preferably between 18,000 liter and 25,000 liter and most preferably between 20,000 liter and 24,000 liter. This considerable capacity makes the tank vessel extremely suitable for large-scale industrial applications where large quantities of medium must be processed. It also contributes to the optimization of the logistical processes by reducing the number of transport movements required for the same quantity of medium, which has a cost-saving effect and increases operational efficiency. It further ensures an optimal utilization of the space within the mobile filter device, while still maintaining a practical and manageable size for transport and storage.

According to a further or alternative embodiment, the volume of adsorbent when the mobile filter device is in use is at most 25 m³, preferably at most 24 m³, more preferably at most 23 m³, more preferably at most 22 m³, more preferably at most 21 m³. Furthermore, the volume of adsorbent when the mobile filter device is in use is at least 5 m³, preferably at least 10 m³, more preferably at least 15 m³, more preferably at least 17 m³, more preferably at least 19 m³. In this context, the filter device is operational and is used to filter a medium through the adsorbent, which absorbs and removes contaminants. "In use" thus implies that the filtration process is active and that the specified quantities of adsorbent are actually being utilized to achieve the intended purification performance. In some embodiments, the volume of adsorbent may for example be between 15 and 25 m³, preferably between 18 and 22 m³, more preferably between 19 and 21 m³, and in the most preferred embodiment approximately 20 m³.

According to a further or alternative embodiment, the tank vessel is manufactured from stainless steel, preferably from 316 stainless steel. One of the most important advantages of using stainless steel is its superior corrosion resistance. This means that the mobile filter device requires less maintenance and has a longer service life. When using stainless steel, therefore, no internal coating is required for corrosion protection. It reduces the risk that the tank vessel will leak during use as a result of corrosion. In particular, 316 stainless steel is a particularly favorable choice of material due to its increased corrosion resistance compared to other types of stainless steel. The use of 316 stainless steel significantly increases the service life of the tank vessel, because it is more resistant to both oxidation and chemical damage compared to other types of steel. This material is particularly suitable for applications in which hygiene and cleanliness are important, such as in the filtering and storage of gases and liquids in industrial and environmental applications. 316 stainless steel contains molybdenum, which increases the resistance to many chemical environments and corrosive substances. The choice of 316 stainless steel not only guarantees a longer operational service life, but also contributes to the safety and effectiveness of the filtration process, by ensuring that the tank vessel remains free of contamination that could affect the medium.

According to a further or alternative embodiment, the tank vessel is entirely manufactured from 316 stainless steel. According to another embodiment, the tank vessel may be partially manufactured from 316 stainless steel. Although 316 stainless steel is preferred, the use of other types of stainless steel, such as 304, 310, or 321 stainless steel, may also be advantageous, depending on the specific application and operating conditions. Each of these types of stainless steel has its own unique set of properties that may make them suitable for certain applications. For example, 304 stainless steel has excellent formability, while 310 stainless steel has excellent oxidation resistance at high temperatures.

According to one embodiment, the tank vessel is cylindrical or capsule-shaped. This specific shape of the tank vessel contributes to flow optimization within the tank, which will result in improved filter performance. With "shape" is meant in this context the principal shape of the tank vessel, with the exception of local protrusions or curvatures caused by, among other things, closing mechanisms. In general, a cylindrical tank vessel will provide the optimal durability and structural properties due to its shape. Also, due to the round shape, there may be no specific weak points present.

According to one embodiment, the tank vessel is an ADR-approved tank. This means that the filter device complies with strict safety standards established by the European Agreement concerning the International Carriage of Dangerous Goods by Road (ADR). This provides additional safety by minimizing the risk of incidents during the transport and storage of hazardous substances. Moreover, the ADR-approved filter device can also be used for the transport and storage of non-hazardous substances, thereby increasing the versatility of the filter device.

The tank vessel may further comprise one or more medium outlets and medium inlets. Preferably, the one or more medium outlets and medium inlets are located within the frame. By integrating the medium inlet and outlet within the frame and the tank vessel, these components are protected against physical damage during transport or during normal use, especially in a mobile context where the tank may be exposed to variable external influences. The integration of these inlets and outlets along the wall enables more efficient use of the available space, which is especially important in confined environments or when the filter device must be mounted on a means of transport. By positioning inlets and outlets close to or in the frame, the connection points can be made more robust and secure, which increases the structural integrity and reduces the risk of leakage, a crucial consideration for the safe handling of liquids and gases. By strategically positioning the inlet and outlet along the wall of the vessel, the flow dynamics within the tank vessel can also be optimized, whereby dead zones are minimized and a more efficient flow and filtration are promoted.

In a second aspect, the invention relates to a use of a mobile filter device according to any one of the embodiments as described herein for filtering a gas.

In this regard, a heat-exchange medium, such as a heating medium or a cooling medium, is preferably circulated in the fluid conduits. The choice of heat-exchange medium may depend on the specific application. In a preferred embodiment, use is made of a liquid heat-exchange medium such as water, glycol mixtures, or another thermally efficient liquid. Alternatively, a gaseous heat-exchange medium, such as CO₂ or ammonia, can be applied in systems where a stronger cooling effect is desired.

The mobile filter device can thereby be transported horizontally and placed vertically during use as a filter.

In one embodiment, the temperature of the gas flow to be purified during use of the mobile filter device is at most 40°C, preferably at most 35°C, more preferably at most 30°C, and most preferably at most 28°C. In one embodiment, the temperature of this gas flow is at least 10°C, preferably at least 15°C, more preferably at least 20°C. In some embodiments, the temperature of the gas flow is between 10°C and 40°C, preferably between 15°C and 35°C, more preferably between 20°C and 30°C. A temperature that is too high increases the risk of desorption of volatile components from the adsorbent, causing previously retained contaminants to be released again into the gas flow. A temperature that is too low increases the risk of condensation in the adsorbent.

In one embodiment for industrial applications, such as metallurgical processes, the temperature of the gas flow may be higher, for example at most 80°C. In such embodiments, the adsorbent used must be resistant to increased thermal loads in order to prevent premature desorption.

In one embodiment for cryogenic applications, such as solvent recovery, the gas flow may be supplied at temperatures down to 0°C or lower. In such embodiments, the device must be resistant to low temperatures, and condensation of volatile components in the adsorbent must be prevented by adequate process control.

In one embodiment, the relative humidity of the gas flow to be purified is at most 90%, preferably at most 85%, more preferably at most 80%, more preferably at most 70%, and most preferably at most 68%. In some embodiments, the relative humidity is between 30% and 90%, preferably between 30% and 80%, more preferably between 30% and 85%. A relative humidity that is too high, such as above 85%, increases the risk of condensation of water in the adsorbent, which leads to channeling, increased pressure drop, and efficiency loss. In some embodiments, such as with impregnated adsorbents, a relative humidity of at most 85% is desired. In other embodiments, such as the capture of volatile organic components (VOC), the relative humidity is preferably at most 50%.

In one embodiment, the temperature of the gas flow is at least the dew point, preferably at least 2°C above the dew point, more preferably at least 5°C above the dew point. This prevents water from condensing on the tank wall or in the adsorbent, resulting in channeling, increased pressure drop, and risk of blockage.

In the following, the invention is described by means of non-limiting examples illustrating the invention, which are not intended to limit the scope of the invention.

### FIGURE DESCRIPTION

**Figure 1** shows a perspective view of a mobile filter device in a horizontal position according to an embodiment of the present invention.
**Figure 2** shows a perspective view of a heat-exchange conduit according to an embodiment of the present invention.

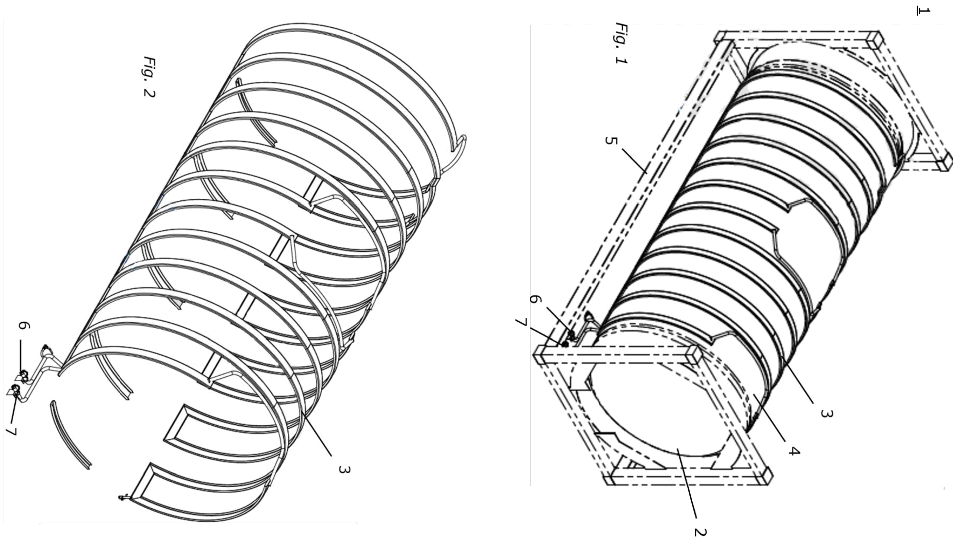

Figure 1 shows a mobile filter device (1) according to an embodiment of the present invention, wherein the tank vessel (2) is provided with a heat-exchange conduit (3) forming a cooling circuit around the exterior (4). The tank vessel (2) is provided with a mounting structure (5), which in this embodiment is a half-open frame. The heat-exchange conduit (3) comprises an inlet (6) and an outlet (7) for the cooling medium. Depending on the ambient conditions, this cooling circuit can likewise be deployed as a heating circuit, wherein a heat medium such as warm water is circulated in order to prevent condensation in the adsorbent at low ambient temperatures.

The mobile filter device (1) further comprises an insulation layer (not shown) and an outer jacket (not shown) that are located on top of the heat-exchange conduits.

Figure 2 shows the same heat-exchange conduit (3), drawn without the tank vessel.

## Claims

1. A mobile filter device (1) for filtering a gas, comprising
- a tank vessel (2) for receiving, storing, and discharging a gas, the tank vessel (2) comprising an interior and an exterior (4), wherein the tank vessel (2) comprises on the interior an adsorbent for adsorbing contaminants from the gas, and
- a mounting structure (5) suitable for repeated demountable connection of the mobile filter device to a transport device,
wherein the tank vessel (2) is provided around the exterior (4) with one or more fluid conduits (3) suitable for heat exchange, and wherein the tank vessel (2) is further a thermally insulated tank vessel.

2. Mobile filter device (1) according to claim 1, wherein a single fluid conduit suitable for heat exchange (3) is provided around the tank vessel.

3. Mobile filter device (1) according to any one of the preceding claims, wherein the one or more fluid conduits (3) are provided over the full height of the tank vessel (2), and wherein the one or more fluid conduits (3) are provided over at least half of the circumference of the tank vessel (2).

4. Mobile filter device (1) according to any one of the preceding claims, wherein one side of the tank vessel (2) is not provided with fluid conduits over its full length.

5. Mobile filter device (1) according to any one of the preceding claims, wherein the tank vessel (2) is provided with an insulation layer that is located on top of the one or more fluid conduits (3).

6. Mobile filter device (1) according to claim 5, wherein the tank vessel (2) is further provided with an outer jacket on top of the insulation layer.

7. Mobile filter device (1) according to any one of the preceding claims, wherein the adsorbent is an activated carbon filter bed.

8. Mobile filter device (1) according to any one of the preceding claims, wherein the mounting structure (5) is a frame that fully encloses the tank vessel (2).

9. Mobile filter device (1) according to claim 8, wherein the external dimension of the frame (5) is defined in ISO standard 668.

10. Mobile filter device (1) according to any one of the preceding claims, wherein the tank vessel (2) is further provided on the interior with a distribution system for distributing incoming medium in the tank vessel (2), wherein the distribution system comprises a conduit provided with a plurality of perforations for creating a gas flow.

11. Mobile filter device (1) according to any one of the preceding claims, wherein the tank vessel (2) has a total volume of between 14,000 liter and 27,000 liter.

12. Use of a mobile filter device (1) according to any one of claims 1 to 13 for filtering a gas flow.

13. Use according to claim 12, wherein a heat-exchange medium is circulated in the fluid conduits (3).

14. Use according to claim 13, wherein the heat-exchange medium is selected from a liquid heat-exchange medium such as water, glycol mixtures, or another thermally efficient liquid, or a gaseous heat-exchange medium, such as CO₂ or ammonia.

15. Use according to any one of claims 12-14, wherein the mobile filter device is transported horizontally, and wherein the mobile filter device is placed vertically during use as a filter.
